# EUROPÄISCHE PATENTSCHRIFT

(11) **EP 1 938 091 B1**
(45) Veröffentlichungstag und Bekanntmachung des Hinweises auf die Patenterteilung: **22.01.2020**
(21) Anmeldenummer: 06792429.0
(22) Anmeldetag: 17.10.2006
(51) Int. Cl.: G01N 21/958

(54) **SYSTEM UND VERFAHREN ZUR OPTISCHEN INSPEKTION VON GLASSCHEIBEN**
SYSTEM AND METHOD FOR OPTICALLY INSPECTING GLASS PANES
SYSTEME ET PROCEDE D'INSPECTION OPTIQUE DE VITRES

(30) Priorität: 21.10.2005 DE 102005050882
(43) Veröffentlichungstag der Anmeldung: 02.07.2008
(73) Patentinhaber: Isra Vision Systems AG, 64297 Darmstadt (DE)
(72) Erfinder: RUDERT, Armin, 45131 Essen (DE)
(74) Vertreter: Keil & Schaafhausen Patent- und Rechtsanwälte PartGmbB
(86) Internationale Anmeldenummer: PCT/EP2006/010007
(87) Internationale Veröffentlichungsnummer: WO 2007/045437

(56) Entgegenhaltungen:
- EP-A1- 0 416 302
- WO-A-98/34096
- DE-A1- 3 108 234
- US-A- 5 309 222
- US-A- 5 642 198
- US-B1- 6 512 239
- US-B1- 6 633 377

## Beschreibung

Die Erfindung betrifft ein System und eine Vorrichtung zur optischen Inspektion von Glasscheiben gemäß dem Oberbegriff des Anspruchs 1, sowie ein Verfahren gemäß dem Oberbegriff des Anspruchs 10. Dazu sind eine Fördereinrichtung zum Verfahren der Glasscheibe und ein Inspektionsmodul vorgesehen, welches eine Beleuchtungseinrichtung und eine Kamera zur Beleuchtung und Aufnahme der Glasscheibe aufweist und mit einem Auswertemodul zur Auswertung der von der Glasscheibe aufgenommenen Bilder verbunden ist. Die Erfindung ist insbesondere zur Inspektion gebogener oder gekrümmter Glasscheiben, bspw. zum Einbau in ein Automobil, geeignet.

In industriellen Prozessen unter Verwendung von Glasscheiben, beispielsweise Windschutzscheiben oder sonstigen Fenstern von Automobilen, ist es notwendig, die Qualität der Scheiben nach der Produktion und vor dem Einbau in eine Autokarosse zu überprüfen. Dazu sind verschiedene Verfahren und Systeme bekannt, die beispielsweise optische Fehler in großflächigen Scheiben feststellen können, Abbildungseigenschaften der Glasscheiben ermitteln, die Dicke einer Scheibe messen oder Kratzer bzw. sonstige Fehlstellen in den Glasscheiben detektieren. Diese vorgeschlagenen Systeme und Verfahren benötigen in der Regel besondere Beleuchtungs- und Aufnahmeanordnungen, um die jeweils gewünschte Detektionsaufgabe optimal durchführen zu können. Dabei sind Aufnahmebedingungen, die für den Nachweis eines Fehlertyps optimal sind, zumeist nicht geeignet, andere Fehlertypen oder Eigenschaften der Glasscheibe zu ermitteln. Daher ist es bislang nicht möglich, die optischen Eigenschaften einer Scheibe und die Qualität der Produktion in einem gemeinsamen System zu ermitteln und anzuzeigen.

Aus der US 6,512,239 B1 ist eine Vorrichtung zur Inspektion von transparenten Medien bekannt. Diese umfasst eine Kombination einer Stereoansichtinspektionseinheit mit einer Sichtfeldinspektionseinheit und einer Dunkelfeldinspektionseinheit. Die Sichtfeldinspektionseinheit weist einen Illuminator auf, der eine gleichmäßige Beleuchtung eines transparenten Mediums bietet. Eine optische Aufnahmeeinrichtung, bspw. eine Kamera ist unterhalb des transparenten Mediums angeordnet. Die Stereoansichtinspektionseinheit weist einen Illuminator auf, der als Beleuchtungseinrichtung dient und unterhalb des transparenten Mediums angeordnet ist. Optische Aufnahmeeinrichtungen sind auf der gegenüberliegenden Seite des transparenten Mediums angeordnet. Eine erste optische Aufnahmeeinrichtung hat einen ersten Laser und einen zweiten Laser, zur Bestimmung der Dicke des transparenten Mediums. Darüber hinaus werden Bilder eines Fehlers aufgenommen, der einen Lichtverlust im Vergleich zu einer Basislinie des durch den Illuminator emittierten Lichts, verursacht. Die Dunkelfeldinspektionseinheit weist eine Lichtquelle auf, die ebenfalls eine gleichmäßige Beleuchtung zur Verfügung stellt. Unterhalb des transparenten Mediums ist wieder eine Aufnahmeeinrichtung angeordnet. Durch eine Aperturblende wird jedoch das durch die Beleuchtungseinrichtung ausgesandte Licht abgeblockt und gelangt nicht auf direktem Wege zur Kamera. Die Kamera nimmt daher das Bild der Aperturblende auf. Falls ein lichtablenkender und transparenter Fehler mit optischen Eigenschaften in dem transparenten Medium vorhanden ist, wird das Licht durch den Fehler in einen Bereich abgelenkt, der durch die optische Aufnahmeeinrichtung aufgenommen wird.

Aus der US 6,633,377 B1 ist eine Vorrichtung bekannt, die aus einer Lichtfeldinspektionseinheit und einer Dunkelfeldinspektionseinheit aufgebaut ist. Die Lichtfeldinspektionseinheit weist einen Illuminator als Beleuchtungseinrichtung auf, der ein transparentes Medium beleuchtet. Auf der gegenüberliegenden Seite des transparenten Mediums ist eine optische Aufnahmeeinrichtung, wie etwa eine Kamera angeordnet, um Bilder des transparenten Mediums aufzunehmen. In Serie dazu ist die Dunkelfeldeinrichtung angeordnet, die ebenfalls eine Lichtquelle aufweist, die durch eine Aperturblende abgedeckt ist. Unterhalb des Transparenten Mediums ist wieder eine optische Aufnahmeeinrichtung angeordnet.

Aus der EP 0 416 302 A1 ist ein Verfahren für die optische Qualitätsprüfung von großflächigen Scheiben aus einem transparenten Werkstoff mit Hilfe einer Moire-Bildauswertung bekannt. Dabeoi wird ein beleuchtetes Flächenraster über ein Objektiv auf einem Referenzraster abgebildet und das Moire-Bild als Superponat aus dem Bild des Flächenrasters und dem Referenzraster erzeugt. Das Superponat wird dann mit einer Videokamera aufgenommen und mit einem Phasenschift-Verfahren ausgewertet. Die zur Auswertung notwendigen Moire-Bilder werden durch Verschieben des Referenzflächenrasters erzeugt.

Aufgabe der Erfindung ist es daher, eine Möglichkeit zur optischen Inspektion von Glasscheiben vorzuschlagen, die eine Gesamtauswertung der optischen Eigenschaften und der Qualität einer Glasscheibe nach der Produktion auf einfache, den jeweiligen Produktionsbedingungen flexibel anpassbare Weise ermitteln kann.

Diese Aufgabe wird mit den Merkmalen der unabhängigen Ansprüche 1 und 10 gelöst.

Bei einem System zur optischen Inspektion von Glasscheiben neben dem ersten Inspektionsmodul mindestens ein zweites Inspektionsmodul mit einer Beleuchtungseinrichtung und einer Kamera zur Beleuchtung und Aufnahme der Glasscheibe vorgesehen. Das zweite Inspektionsmodul ist ebenso wie das erste mit einem zweiten Auswertemodul zur Auswertung der von der Glasscheibe aufgenommenen Bilder verbunden, wobei die Beleuchtungsanordnungen und/ oder die Kameras des ersten Inspektionsmoduls und des zweiten Inspektionsmoduls unterschiedlich aufgebaut und/oder verschieden zu der mittels der Fördereinrichtung an den Inspektionsmodulen vorbeifahrbaren Glasscheibe angeordnet sind.

Durch die Anordnung mehrerer verschiedener Inspektionsmodule an einer Fördereinrichtung zum Verfahren der Glasscheibe wird erfindungsgemäß erreicht, dass in einem kompakten, gemeinsamen System verschiedene Messungen an der Glasscheibe in auf einander abgestimmter Weise durchgeführt werden können. Daher ist es mit dem vorgeschlagenen System im Gegensatz zu der Anordnung mehrerer separater Überwachungs- oder Kontrollsysteme, die jeweils ein singuläres Messergebnis liefern, durch die Zusammenfassung verschiedener Inspektionsmodule in einem System möglich, die Messergebnisse der verschiedenen Inspektionsmodule miteinander zu kombinieren und die Ergebnisse der Einzelauswertungen derart zusammenzufassen, dass als Inspektionsergebnis ein vollständiger Bericht über den einzelnen Prüfling automatisch erzeugt wird. Neben der Zusammenfassung der Ergebnisse der einzelnen Inspektionsmodule kann durch das erfindungsgemäße Zusammenwirken der mehreren Inspektionsmodule auch eine Verbesserung des Inspektionsergebnisses insgesamt erreicht werden, weil die Ergebnisse eines Inspektionsmoduls für das Ergebnis eines anderen Inspektionsmoduls berücksichtigt werden können. Außerdem werden durch das Zusammenwirken der verschiedenen Inspektionsmodule in einem gemeinsamen System Systemkomponenten eingespart, da bestimmte Teilmessungen für jedes Inspektionssystem bzw. -verfahren durchgeführt werden müssen, die in dem erfindungsgemäßen System daher nur einmal auszuführen sind. Neben der damit verbundenen Kosteneinsparung ist das vorgeschlagene System auch in der Lage, besonders schnell ein komplettes Inspektionsergebnis einer Glasscheibe zu erzeugen, und kann daher besonders produktionsnah eingesetzt werden. Es lässt sich problemlos in den Zeitablauf der Produktion eingliedern, ohne dass die Produktion für die Durchführung der Überprüfung bzw. Inspektion angehalten oder verlangsamt werden müsste.

Für die gemeinsame Verwertung einzelner Inspektionsergebnisse in dem Gesamtsystem ist es besonders vorteilhaft, wenn eine zentrale Auswerteeinheit vorgesehen ist, die den den einzelnen Inspektionsmodulen zugeordneten Auswertemodulen nachgeschaltet ist. Indem vorzugsweise jedem Inspektionsmodul zunächst ein eigenständiges Auswertemodul zugeordnet ist, kann die Auswertung der von dem Inspektionsmodul aufgenommenen Bilder sofort nach der Bildaufnahme beginnen, so dass diesbezüglich keine Verzögerung eintritt und die nacheinander geschalteten Inspektionsmodule die Inspektion der mittels der Fördereinrichtung an den Inspektionsmodulen vorbeifahrenden Glasscheibe parallel ausführen. Dabei ist erfindungsgemäß vorgesehen, dass an der Fördereinrichtung Referenzgeber angeordnet sind, um die Orte der in den Inspektionsmodulen festgestellten Fehler auf einfache Weise aufeinander beziehen zu können. Alternativ ist auch möglich, die Fehlerorte über in dem System gespeicherte Konstruktionsdaten der Glasscheibe und eine zwei- bzw. dreidimensionale Lagemessung der Glasscheibe in jedem Inspektionsmodul durchzuführen. Das letztere Verfahren hat den Vorteil, dass der Fehlerort nicht relativ zu der außerhalb der Glasscheibe liegenden Fördereinrichtung, sondern im Koordinatensystem der Glasscheibe selbst bekannt ist, so dass die Inspektion grundsätzlich auch an verschiedenen Bändern durchgeführt werden könnte. Allerdings ist der Messaufwand größer.

Eine optimale und im Hinblick auf die zur Verfügung gestellten Informationen zu den optischen Eigenschaften und typischen Fehlern in einer Glasscheibe vollständige Inspektion lässt sich erfindungsgemäß dadurch erreichen, dass mindestens drei Inspektionsmodule mit jeweils mindestens einem, diesem zugeordneten Auswertemodul vorgesehen sind.

Das System weist ein Modul mit Rasterbeleuchtung und Transmissionsanordnung auf. In einem derartigen Modul projiziert eine Lichtquelle der Beleuchtungseinrichtung ein definiertes Muster aus regelmäßigen Sequenzen durch die Glasscheibe hindurch auf die Kamera, wobei die Sequenzen wenigstens zwei unterschiedliche Lichtintensitäten umfassen uns die Rastergrenzen des projizierten Bildes vorzugsweise auf einer vorgegebenen Anzahl von Kamerapixeln abgebildet werden. Bei nicht optimalen bzw. fehlerhaften optischen Abbildungseigenschaften der Glasscheibe wird das projizierte Muster dann in dem Kamerabild nicht optimal reproduziert, wobei durch die Art der Abbildung auf die Fehler in den optischen Abbildungseigenschaften zurückgeschlossen werden kann. Bei diesem Verfahren kann auch eine Moire-Erscheinung an den Kamerapixeln auftreten, die als Phasenverschiebung am Ausgang der Kamerapixel erfassbar ist und mit geringem Aufwand den Winkel ermitteln lässt, um den der Lichtstrahl abgelenkt wurde. Dies lässt beispielsweise Rückschlüsse auf die Brechkraft der Scheibe zu. In diesem Inspektionsmodul findet also eine Inspektion auf Fehler in der Transmissionsoptik der Glasscheibe statt.

Als weiteres der drei Inspektionsmodule ist erfindungsgemäß besonders vorteilhaft ein Modul mit einer Durchlichtanordnung vorgesehen, das insbesondere einer Inspektion auf absorbierende Fehler dient. Bei dieser Anordnung wird die Glasscheibe durch eine insbesondere möglichst homogene Lichtquelle durchleuchtet, wobei die Transmissionsunterschiede mit Hilfe einer Kamera festgestellt werden. Dieses Modul mit Durchlichtanordnung ist auch besonders geeignet, um Fehler in einer möglichen Bedruckung mit Hilfe einer Kamera festzustellen, da die ansonsten hell durchleuchtete Scheibe im Bereich der Bedruckung dunkel werden muss. Sofern in den aufgrund der Bedruckung an sich abgedunkelten Bereichen helle Punkte auftauchen, ist die Bedruckung an dieser Stelle nicht optimal bzw. fehlerhaft. Dieses Verfahren ist auch geeignet, um beispielsweise die Dicke der aufgetragenen Druckschicht und Schwankungen in der Schichtdicke der Bedruckung durch eine Intensitätsmessung festzustellen.

Ein weiteres, bei einem drei-modularen Aufbau des Systems vorzugsweise vorgesehenes Inspektionsmodul ist ein Modul mit einer Anordnung zur Kratzerdetektion. Eine derartige Anordnung nimmt eine Scanlinie auf der Materialoberfläche der Glasscheibe auf, wobei eine Beleuchtungseinrichtung vorzugsweise ein quer zur Scanlinie paralleles, in Richtung der Scanlinie diffuses oder quasi-diffuses Licht erzeugt und vorzugsweise eine weitere Beleuchtungseinrichtung vorgesehen sein kann, die ein quer zur Scanlinie diffuses oder quasi-diffuses Licht erzeugt. Eine Kamera, welche die Scanlinie aufnimmt, ist dann vorzugsweise so ausgerichtet, dass der Aufnahmebereich der Kamera in die Lichtfalle ausgerichtet ist. Mögliche Kratzer, Luftblasen oder sonstige Fehler in der Glasscheibe erzeugen dann in dem an sich dunklen Bild der Lichtfalle aufgrund der Lichtstreuung ein gut kontrastiertes Abbild des Fehlers, der auf daher gut vermessen und klassifiziert werden kann.

Obwohl die drei vorgenannten Inspektionsmodule besonders vorteilhaft in einer Anordnung eines Systems mit drei Inspektionsmodulen vorgesehen werden, um eine möglichst umfassende Information über den inspizierten Prüfling zu erhalten, ist es erfindungsgemäß nicht unbedingt notwendig, dass in einem System zur Fehlerinspektion immer diese drei Module vorgesehen sind. Beispielsweise ist es auch möglich, dass je nach Inspektionsaufgabe Module weggelassen und/oder durch andere Module ersetzt werden.

Erfindungsgemäß ist weiterhin ein Inspektionsmodul mit einer Rasterbeleuchtung und einer Reflektionsanordnung vorgesehen, bei dem also ein auf die Glasscheibe projiziertes Raster in einer reflektierenden Anordnung gemessen wird. Hierdurch lassen sich Fehler in der Reflexionsoptik des Glases ermitteln. Ferner kann ein Modul zur Messung der Scheibenform vorgesehen sein, das bspw. Kameras aufweist, die insbesondere auch den Scheibenrand des Bildes mit erfassen und durch Auswertung des Randes der Scheibe die Scheibenform bestimmen. Ein derartiges Modul könnte auch zur Inspektion von Randfehlern verwendet werden. Für die Auswertung von Randfehlern kann jedoch auch das Modul mit Durchlichtanordnungen geeignet sein, indem die Bilder des Scheibenrandes einer gesonderten Auswertung zugeführt werden. Entsprechendes gilt für die Vermessung eines Verlaufs des Scheibenrandes. Für eine Messung der Scheibenform können beispielsweise auch die Krümmung gebogener Glasscheiben oder deren Dicke bestimmt werden. Dazu kann das Inspektionsmodul als Beleuchtungseinrichtung mindestens einen Laserstrahl aufweisen, der durch eine geeignete Strahloptik in insgesamt zwei oder drei Laserstrahlen aufgefächert wird, von denen zwei Laserstrahlen mit verschiedenen Auftreffwinkeln benachbart auf die Glasscheibe auftreffen und zu einem der beiden Laserstrahlen mit Parallelversatz ein dritter Laserstrahl erzeugt wird, wobei die Reflexion der Laserstrahlen an der vorderen und hinteren Grenzfläche des Glases durch geeignete Kameras nachgewiesen wird. Durch die beiden mit unterschiedlichem Winkel auf die Glasfläche einfallenden Lichtstrahlen kann die Dicke der Probe ermittelt und eine Neigungs- und Keilwinkelkorrektur vorgenommen werden. Durch den dritten, zu dem ersten oder zweiten Laserstrahl parallelen Laserstrahl lässt sich ferner eine Krümmungskorrektur erreichen. Eine weitere Möglichkeit zur Messung der Scheibenform kann darin liegen, ein im Wesentlichen sinusförmiges Muster nach Spiegelung auf der Glasscheibe oder Durchsicht durch die Glasscheibe auf einer Kamera abzubilden und die lokale Phase dieses Musters in der Bildebene zu bestimmen. Aus der Anwendung dieses Verfahrens lassen sich ebenfalls Rückschlüsse auf die Form der Glasscheibe ziehen, wobei das Modul zur Messung der Scheibenform in diesem Fall als Beleuchtungseinrichtung eine geeignete Mustererzeugungseinrichtung aufweist.

Erfindungsgemäß kann in einem Inspektionsmodul, insbesondere dem Inspektionsmodul mit der Durchlichtanordnung, zusätzlich mindestens eine Kamera im von der Beleuchtungseinrichtung des Inspektionsmoduls nicht erfassten Dunkelfeld vorgesehen sein. Dieses Inspektionsmodul kann dann insbesondere zur Inspektion von Randfehlern und/oder zur Messung der Scheibenform herangezogen werden.

Insbesondere im Zusammenhang mit der Messung der Scheibenform können in einem Modul mit Durchlichtanordnung oder einem Modul zur Messung der Scheibenform zusätzlich Kameras in einer Stereoanordnung angebracht sein, um beispielsweise eine dreidimensionale Vermessung des Scheibenrandes zu ermöglichen. Durch eine derartige Anwendung von Stereokameras in einem Inspektionsmodul ist es möglich, die Position und Form des Randes auch dreidimensional besonders genau zu vermessen.

Gemäß des erfindungsgemäßen Verfahrens sind die Inspektionsmodule te-des Systems zur Messung der Glasscheibe im Vorbeifahren, d.h. in der Bewegung, eingerichtet. Hierdurch wird ein kontinuierlicher Inspektionsprozess während der laufenden Produktion ermöglicht. Dies kann bspw. durch einen ausreichend hohen Kontrast und entsprechend kurze Belichtungszeiten der Kameras erreicht werden.

Eine bevorzugte Anwendung des Systems und Verfahrens zur optischen Inspektion von Glasscheiben sind Autoglasscheiben, beispielsweise Windschutzscheiben, Heckscheiben und Seitenfenster. Ferner ist die Erfindung insbesondere für gebogene und/oder gekrümmte Glasscheiben gleichermaßen geeignet einsetzbar.

Erfindungsgemäß kann auch vorgesehen sein, dass ein Inspektionsmodul eine schräge Anordnung der Kamera zu der Glasscheibe und ein Inspektionsmodul eine senkrechte Anordnung der Kamera zu der Glasscheibe aufweist. Hierdurch ist es möglich, je nach Einbausituation der Glasscheibe besonders wichtige Blickrichtungen durch die Glasscheibe automatisiert und in demselben System zu inspizieren.

Vorzugsweise ist jedes Inspektionsmodul als separate Einheit aufgebaut, wobei die mehreren Inspektionsmodule hintereinander entlang der Fördereinrichtung angeordnet sind. Durch diesen modularen Aufbau des erfindungsgemäßen Systems kann das Inspektionssystem besonders einfach an verschiedene Inspektionsaufgaben, beispielsweise für verschiedene Produktionen, angepasst werden, ohne dass das gesamte System deinstalliert und neu einjustiert werden muss. Dabei kann in jedes Inspektionsmodul das diesem Inspektionsmodul speziell zugeordnete Auswertemodul mit integriert sin. Die Ergebnisse dieses Auswertemoduls können dann standardisiert der zentralen Auswerteeinheit für die weitere, übergeordnete Auswertung zugeführt werden.

Um die Störeinflüsse bei den Messungen eines Inspektionsmoduls möglichst gering zu halten, kann ein Inspektionsmodul gegen einen Lichteinfall und/oder das Einströmen von Zugluft abgeschirmt sein.

Bei dem erfindungsgemäßen Verfahren zur optischen Inspektion von Glasscheiben, das insbesondere unter Verwendung des vorbeschriebenen Systems ausgeführt wird, wird eine Glasscheibe an einem ersten Inspektionsmodul vorbeigefahren, wobei unter Beleuchtung der Glasscheibe Bilder mit einer Kamera aufgenommen und diese Bilder mit einem ersten Auswerteverfahren in einem ersten Auswertemodul ausgewertet werden. Erfindungsgemäß wird die Glasscheibe anschließend mindestens an einem zweiten Auswertemodul vorbeigefahren, wobei unter Beleuchtung der Glasscheibe Bilder mit einer Kamera aufgenommen und diese Bilder mit einem zweiten, von dem ersten Auswerteverfahren verschiedenen Auswerteverfahren in einem zweiten Auswertemodul ausgewertet werden. Durch die Kombination mehrerer verschiedener Auswerteverfahren und -anordnungen wird erfindungsgemäß eine umfassende Inspektion aller bzw. vieler Eigenschaften der untersuchten Glasscheibe erreicht.

Eine im Wesentlichen vollständige Überprüfung der Glasscheibe lässt sich dadurch erreichen, dass die Glasscheibe an mindestens drei Inspektionsmodulen vorbeigefahren und mindestens drei Auswerteverfahren angewendet werden. Bei den Inspektionsmodulen handelt es sich dann vorzugsweise um ein Modul mit Rasterbeleuchtung, ein Modul mit Durchlichtanordnung und ein Modul mit Anordnung zur Kratzerdetektion, wobei in den jeweiligen Modulen eine Inspektion auf Fehler in der Optik der Glasscheibe, eine Inspektion auf absorbierende Fehler und eine Inspektion auf Kratzer durchgeführt wird. Sofern die Glasscheibe bedruckt ist, kann auch eine Inspektion auf Bedruckungsfehler stattfinden.

Je nach den gewünschten Anforderungen können mit dem erfindungsgemäßen Verfahren ggf. zusätzlich zu den vorgenannten Auswerteverfahren eine Inspektion auf Randfehler und/oder eine Messung der Scheibenform und/oder des Verlaufs der Scheibenform angewendet werden.

Gemäß einer vorteilhaften Ausbildung des erfindungsgemäßen Verfahrens ist vorgesehen, dass nicht inspizierbare Bereiche der Glasscheibe anhand vorgegebener Kriterien bei einem Auswerteverfahren von der Bildverarbeitung erkannt werden. Hierdurch wird erreicht, dass ansonsten auftretende Fehlermeldungen unterdrückt werden.

Erfindungsgemäß können die Aufnahmen der Glasscheibe während des Vorbeifahrens der Glasscheibe an dem Inspektionsmodul, also in der laufenden Bewegung, erfolgen.

Um ein übersichtliches Gesamt-Inspektionsergebnis zu erzeugen, können die Ergebnisse der verschiedenen Auswerteverfahren in einer zentralen Auswerteeinheit zusammengefasst werden.

Dabei können die Ergebnisse der verschiedenen Auswerteverfahren erfindungsgemäß miteinander verknüpft werden und es kann eine übergeordnete Auswertung unter Verwendung der Ergebnisse mehrerer Inspektionseinheiten erfolgen. Insbesondere ist es damit also möglich, die verschiedenen Ergebnisse der verschiedenen Inspektionsmodule miteinander zu verbinden und auf diese Weise ein insgesamt präziseres Inspektionsergebnis zu erreichen.

Damit kann dann aus den Ergebnissen aller Inspektionsmodule erfindungsgemäß eine vollständige Gesamtbeurteilung der Glasscheibe erstellt und in Form eines Berichtes oder einer visuellen Darstellung angezeigt werden.

Weitere Merkmale, Vorteile oder Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine schematische Gesamtansicht eines erfindungsgemäßen Systems zur optischen Inspektion von Glasscheiben mit drei Inspektionsmodulen und
- Fig. 2: ein Blockschaltbild zur Durchführung des erfindungsgemäßen Verfahrens.

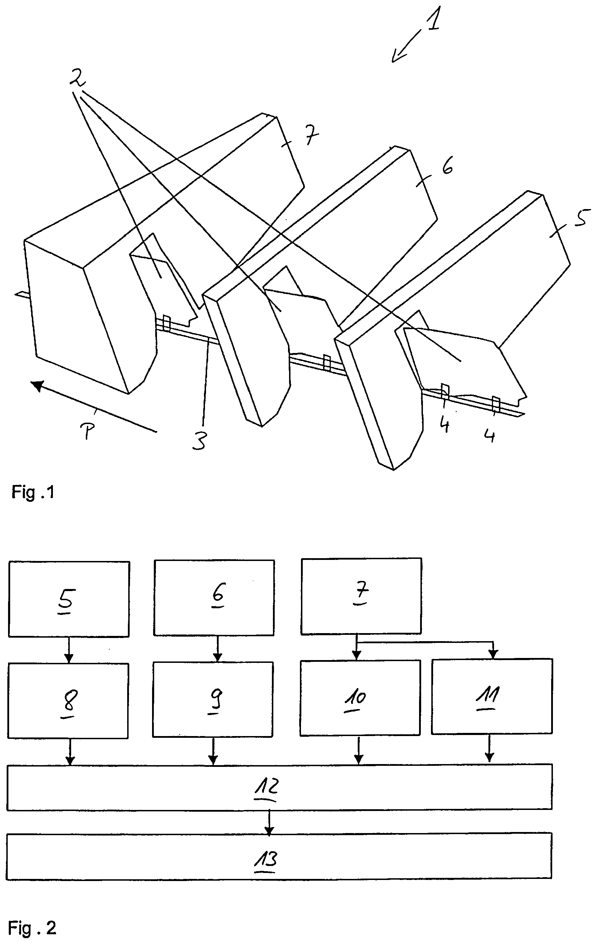

Das in Fig. 1 dargestellte System 1 zur optischen Inspektion von Glasscheiben 2 ist an einem als Fördereinrichtung ausgebildeten Transportband 3 angeordnet, auf dem die Glasscheiben 2 über geeignete Halter 4 gehalten werden. Das System 1 weist mehrere Inspektionsmodule 5, 6, 7 auf, die derart an dem Transportband 3 angeordnet sind, dass sie die zu inspizierenden Glasscheiben 2 umschließen, während sie auf dem Transportband 3 in Richtung des Pfeiles P das System 1 zur optischen Inspektion durchlaufen.

Das erste Inspektionsmodul 5 ist erfindungsgemäß ein Modul mit einer Rasterbeleuchtung und Transmissionsanordnung, in dem eine Inspektion auf Fehler der Transmissionsoptik der Glasscheibe 2 stattfindet, um eine optische Verzeichnung festzustellen. Sofern mit dem System 1 die bevorzugte Inspektion von Windschutzscheiben für Kraftfahrzeuge durchgeführt wird, werden die Glasscheiben 2 typischerweise in der Blickrichtung untersucht, in der der Fahrzeugführer bei einer montierten Scheibe 2 durch diese hindurchblickt. Dies ist bei einer Windschutzscheibe etwa ein Winkel von 60° zur Glasnormalen. Unter Einbeziehung der Moiré-Technologie werden in diesem Inspektionsmodul 5 Abbildungsfehler sowohl in vertikaler als auch in horizontaler Richtung festgestellt.

Das zweite Inspektionsmodul 6, durch das die zu inspizierende Glasscheibe 2 durchgeführt wird, ist ein Modul zur Kratzerdetektion, bei der durch Lichtstreuung Fehler wie Kratzer, Lufteinschlüsse oder Absplitterungen auf dem Glas erkannt werden. Dazu wird das Streulicht von der Oberfläche der zu untersuchenden Glasscheibe 2 detektiert und analysiert, wobei auch die Größe der mechanischen Fehler, die Auswirkungen auf die Lichtstreuung und die Position des Fehlers erfasst werden. Diese Informationen werden dann zur Fehlerklassifizierung und -Ortung verwendet. Für die Inspektion wird die Glasscheibe 2 vorzugsweise mit parallel und senkrecht zu einer Scanlinie der Kamera erzeugtem Licht ausgeleuchtet, wobei die Kamera durch die Scanlinie auf der Glasscheibe 2 hindurch in eine Lichtfalle blickt. Bei einer intakten Glasscheibe 2 wird daher ein dunkles Bild registriert. Durch das in zueinander orthogonalen Richtungen ausgerichtete Licht finden im Falle von Kratzern oder Fehlern in der Glasscheibe 2 dagegen Streuungen statt, die vor dem dunklen Hintergrund der Lichtfalle durch die Kamera gut erfasst werden. Dabei deckt das Inspektionsmodul 6 zur Kratzerdetektion auch die Ränder der Glasscheibe mit ab.

Das letzte der drei Inspektionsmodule bildet ein Modul 7 mit einer Durchlichtanordnung, welches einer Inspektion auf absorbierende Fehler dient. Durch entsprechend Transmissionsmessungen können sowohl Fehler durch Einschlüsse in dem Glas als auch Fehler in einer Bedruckung festgestellt werden.

Die Inspektionsmodule 5, 6 und 7 sind jeweils mit Verkleidungen versehen, um die eigentlichen Messanordnungen gegen Streulicht und Luftzug zu schützen und zuverlässige Messanordnungen zu liefern.

Die Auswertung der Inspektionen in den einzelnen Inspektionsmodulen 5, 6 und 7 findet jeweils in separaten Auswertemodulen 8, 9, 10 und 11 statt, die in Fig. 1 nicht dargestellt sind und beispielsweise mit in die Gehäuse der Inspektionsmodule 5, 6, 7 integriert oder separat, beispielsweise als PC, ausgebildet sein können.

In dem System 1 findet die Inspektion also in mehreren, hintereinander geschalteten separaten Inspektionsmodulen 5, 6, 7 statt, wobei jedes dieser Module 5, 6, 7 eine der Inspektionsmethode angepasste Anordnung der zu prüfenden Glasscheibe 2 und der in den Inspektionsmodulen vorgesehenen Kamera und Beleuchtung realisiert. Die Module 5, 6, 7 sind dabei so ausgelegt und konstruiert, dass die Glasscheiben 2 auf dem Transportband 3 nacheinander durch die einzelnen Module 5, 6 und 7 hindurchlaufen können, ohne dass sie von dem Transportband 3 abgenommen werden müssen oder das Transportband 3 angehalten werden muss.

Nachfolgend wird das Verfahren zur Inspektion anhand des Blockschaltbilds gemäß Fig. 2 noch einmal näher erläutert.

Ausgangspunkt der Inspektion sind die Messungen in dem Inspektionsmodul 5 mit Rasterbeleuchtung und Transmissionsanordnung, dem Inspektionsmodul 6 zur Kratzerdetektion und dem Inspektionsmodul 7 mit Durchlichtanordnung, wozu mit Kameras jeweils entsprechende Bilder von der Glasscheibe 2 aufgenommen werden. Diese Bilder werden für jedes Inspektionsmodul 5, 6, 7 einem oder mehreren separaten Auswertemodulen 8, 9, 10 und 11 zugeführt, in denen die Bilder mit einem entsprechenden Auswerteverfahren ausgewertet werden.

Die Bilder des Inspektionsmoduls 5 werden dabei dem Auswertemodul 8 zur Inspektion auf Fehler in der Transmissionsoptik zugeführt. Entsprechend werden die Bilder des Inspektionsmoduls 6 in dem Auswertemodul 9 zur Inspektion auf Kratzer ausgewertet.

Die Aufnahmen des Inspektionsmoduls 7 mit Durchlichtanordnung werden parallel den Auswertemodulen 10 zur Inspektion auf absorbierende Fehler und 11 zur Inspektion auf Bedruckungsfehler zugeführt. Da die Auswertung der Bilder für das Feststellen von Bedruckungsfehlern und sonstigen Absorptionsfehlern auf unterschiedlichen Auswerteverfahren beruht, ist es sinnvoll, diese Auswertung parallel durchzuführen, um eine rasche Inspektion zu erreichen, die online im Rahmen des Produktionsprozesses durchgeführt werden kann.

In einem ersten Verfahrensschritt werden die Fehler einer Glasscheibe 2 zunächst in jedem der Inspektionsmodule 5, 6, 7 separat gefunden und deren Merkmale (Fehlerart, Position oder dergleichen) bestimmt bzw. gemessen. Diese Einzelinformationen werden dann in einer zentralen Auswerteeinheit 12 zusammengeführt, wobei unter Verwendung der Informationen aus sämtlichen Auswertemodulen 8 bis 11 eine zuverlässige Fehlerklassifikation durchgeführt werden kann, da durch die direkte Hintereinanderschaltung der Inspektionsmodule 5, 6 und 7 mit den Auswerteergebnissen in den Auswertemodulen 8, 9, 10, 11 zu jedem Fehler entsprechend vielfältige Informationen vorliegen.

Dabei stellt die Verwendung der beschriebenen Inspektionsmodule 5, 6, 7 mit Rasterbeleuchtung und Transmissionsanordnung, zur Kratzerdetektion und mit Durchlichtanordnung für die Auswertung der Inspektion auf Fehler in der Transmissionsoptik, auf Kratzer, auf absorbierende Fehler und ggf. auf Bedruckungsfehler eine sinnvolle Kombination von Inspektionsmethoden zusammen, weil durch sie alle im Fertigungsprozess einer Glasscheibe interessierenden Größen bestimmt und die wichtigsten Fehler gefunden werden, da alle wesentlichen Fehlereinflüsse und Maße abgesehen von der Scheibenform erfasst werden. Die Erfassung der Scheibenform ist in der Regel wesentlich aufwendiger und wird daher oft auch in einem anderen Stadium der Produktion gemessen. Es ist erfindungsgemäß jedoch ohne Weiteres möglich, auch ein Modul zur Messung der Scheibenform mit in das System zu integrieren.

Die Inspektionsmodule 5, 7 mit Rasterbeleuchtung und Durchlichtanordnung mit den entsprechenden Auswerteverfahren zur Inspektion auf Fehler der Transmissionsoptik und absorbierende Fehler ergänzen sich dabei ideal, da mit einer die Optik messenden Anordnung von Kamera und Beleuchtungseinheit in dem Inspektionsmodul 5 absorbierende Fehler nur schlecht aufgefunden werden können und mit einer Anordnung von Kamera und Beleuchtungseinheit in dem Inspektionsmodul 7 für die Durchlichtanordnung die optischen Eigenschaften nicht bestimmt werden können. Entsprechendes gilt für das Modul 6 zur Kratzerdetektion, weil Kratzer die Messung der optischen Eigenschaften stören können, sie jedoch mit einer Anordnung gemäß 1 nicht immer erkannt werden. Durch die Hintereinanderschaltung der Inspektionsmodule 5, 6 und 7 ist es daher möglich, alle wichtigen Informationen miteinander zu verknüpfen und ggf. eine übergeordnete Auswertung vorzunehmen, in der technisch sinnvolle Verknüpfungen der Informationen der einzelnen Inspektionsmodule 5, 6 und 7 vorgenommen werden.

Die Auswertemodule 8, 9, 10 und 11 bilden dabei die erste Stufe eines Auswerterechnersystems, welches so aufgebaut ist, dass die Zusammenstellung der Inspektionsmodule 5, 6 und 7 und der Inspektionsauswertungen in den Auswertemodulen 8, 9, 10 und 11 beliebig konfiguriert werden können. Daher ist die vorliegende Erfindung auch nicht auf die dargestellte Ausführungsform mit den speziellen Inspektionsmodulen 5, 6, 7 und Auswertemodulen 8, 9, 10 und 11 beschränkt, sondern kann beliebig an verschiedene Inspektionsaufgaben angepasst werden.

In einem letzten Verfahrensschritt wird eine Gesamtbeurteilung 13 der Glasscheibe 2 erstellt, die alle Informationen aus den unterschiedlichen Inspektionsmodulen 5, 6, 7 verwendet. Diese beinhaltet sowohl ein Fehlerprotokoll als auch maßgebliche Angaben zu den optischen Eigenschaften der Glasscheibe 2. Alle einen Scheibenhersteller interessierenden Größen und Fehler können daher in dem kompakten System 1 erfasst und angezeigt werden. In einer bevorzugten Darstellung der Gesamtbeurteilung kann auf einem Bildschirm das Bild einer Scheibe erzeugt werden, in dem die optischen Eigenschaften der Glasscheibe 2 beispielsweise durch eine Falschfarbendarstellung dargestellt werden und das die erkannten Fehler eingetragen werden, wobei je nach Fehlerklasse ein anderes Symbol verwendet wird.

Daher ist das erfindungsgemäße System 1 bzw. das mit diesem System durchgeführte Verfahren in der Lage, eine vollständige Inspektion einer Glasscheibe 2 systemimmanent durchzuführen und alle wichtigen Daten zu der Produktion und Qualität der Glasscheibe 2 übersichtlich anzuzeigen.

### Bezugszeichenliste:

- 1: System zur optischen Inspektion von Glasscheiben
- 2: Glasscheibe
- 3: Fördereinrichtung, Transportband
- 4: Halter
- 5: Inspektionsmodul mit Rasterbeleuchtung und Transmissionsanordnung
- 6: Inspektionsmodul zur Kratzerdetektion
- 7: Inspektionsmodul mit Durchlichtanordnung
- 8: Auswertemodul für Inspektion auf Fehler in der Transmissionsoptik
- 9: Auswertemodul für Inspektion auf Kratzer
- 10: Auswertemodul für Inspektion auf absorbierende Fehler
- 11: Auswertemodul für Inspektion auf Bedrucksungsfehler
- 12: zentrale Auswerteeinheit
- 13: Gesamtbeurteilung

- P: Durchlaufrichtung

## Patentansprüche

1. System zur optischen Inspektion von Glasscheiben (2) mit einer Fördereinrichtung (3) zum Verfahren der Glasscheibe (2) und einem ersten Inspektionsmodul (5, 6, 7), welches eine Beleuchtungseinrichtung und eine Kamera zur Beleuchtung und Aufnahme der Glasscheibe (2) aufweist und mit einem ersten Auswertemodul (8, 9, 10, 11) zur Auswertung der von der Glasscheibe (2) aufgenommenen Bilder verbunden ist, wobei mindestens ein zweites Inspektionsmodul (5, 6, 7) mit einer Beleuchtungseinrichtung und einer Kamera zur Beleuchtung und Aufnahme der Glasscheibe (2), welches mit einem zweiten Auswertemodul (8, 9, 10, 11) zur Auswertung der von der Glasscheibe (2) aufgenommenen Bilder verbunden ist, wobei die Beleuchtungsanordnungen und/oder die Kameras des ersten Inspektionsmoduls (5, 6, 7) und des zweiten Inspektionsmoduls (5, 6, 7) unterschiedlich aufgebaut und/oder verschieden zu der mittels der Fördereinrichtung (3) an den Inspektionsmodulen (5, 6, 7) vorbeifahrbaren Glasscheibe (2) angeordnet sind, wobei die Inspektionsmodule (5, 6, 7) des Systems (1) zur Messung der Glasscheibe (2) im Vorbeifahren eingerichtet sind und **dadurch gekennzeichnet, dass** die Inspektionsmodule des Systems (1) ein Modul mit Rasterbeleuchtung und Transmissionsanordnung (5), bei dem eine Lichtquelle der Beleuchtungseinrichtung ein definiertes Muster durch die Glasscheibe hindurch auf die Kamera projiziert, und ein Modul mit Rasterbeleuchtung und Reflexionsanordnung sind, bei dem ein auf die Glasscheibe projiziertes Raster in einer reflektierenden Anordnung gemessen wird.

2. System nach Anspruch 1, **gekennzeichnet durch** eine zentrale Auswerteeinheit (12), welche den Auswertemodulen (8, 9, 10, 11) nachgeschaltet ist.

3. System nach Anspruch 1 oder 2, **dadurch gekennzeichnet, dass** mindestens drei Inspektionsmodule (5, 6, 7) mit jeweils einem zugeordneten Auswertemodul (8, 9, 10, 11) vorgesehen sind.

4. System nach einem der vorhergehenden Ansprüche, **dadurch gekennzeichnet, dass** in einem Inspektionsmodul (5, 6, 7) mindestens eine Kamera im von der Beleuchtungseinrichtung des Inspektionsmoduls nicht erfassten Dunkelfeld vorgesehen ist.

5. System nach einem der vorhergehenden Ansprüche, **dadurch gekennzeichnet, dass** in einem Inspektionsmodul (5, 6, 7) Kameras in einer Stereoanordnung angebracht sind.

6. System nach einem der vorhergehenden Ansprüche, **dadurch gekennzeichnet, dass** die Glasscheibe eine Autoglasscheibe (2) ist.

7. System nach einem der vorhergehenden Ansprüche, **dadurch gekennzeichnet, dass** ein Inspektionsmodul (5) eine schräge Anordnung der Kamera zu der Glasscheibe (2) und ein Inspektionsmodul (6, 7) eine senkrechte Anordnung der Kamera zu der Glasscheibe (2) aufweist.

8. System nach einem der vorhergehenden Ansprüche, **dadurch gekennzeichnet, dass** die Inspektionsmodule (5, 6, 7) als separate Einheiten aufgebaut sind, die hintereinander entlang der Fördereinrichtung (3) angeordnet sind.

9. System nach einem der vorhergehenden Ansprüche, **dadurch gekennzeichnet, dass** ein Inspektionsmodul (5, 6, 7) gegen einen Lichteinfall und/oder das Einströmen von Zugluft abgeschirmt ist.

10. Verfahren zur optischen Inspektion von Glasscheiben (2), insbesondere unter Verwendung des System (1) nach einem der Ansprüche 1 bis 9, bei dem eine Glasscheibe (2) an einem ersten Inspektionsmodul (5, 6, 7) vorbeigefahren wird, wobei unter Beleuchtung der Glasscheibe (2) Bilder mit einer Kamera aufgenommen und diese Bilder mit einem ersten Auswerteverfahren in einem ersten Auswertemodul (8, 9, 10, 11) ausgewertet werden, wobei die Glasscheibe (2) anschließend mindestens an einem zweiten Inspektionsmodul (5, 6, 7) vorbeigefahren wird, wobei unter Beleuchtung der Glasscheibe (2) Bilder mit einer Kamera aufgenommen und diese Bilder mit einem zweiten, von dem ersten Auswerteverfahren verschiedenen Auswerteverfahren in einem zweiten Auswertemodul (8, 9, 10, 11) ausgewertet werden, wobei die Inspektionsmodule (5, 6, 7) des Systems (1) zur Messung der Glasscheibe (2) im Vorbeifahren eingerichtet sind und **dadurch gekennzeichnet, dass** als Auswerteverfahren eine Inspektion auf optische Fehler der Glasscheibe (2) in Transmissionsoptik, bei der eine Lichtquelle der Beleuchtungseinrichtung ein definiertes Muster durch die Glasscheibe hindurch auf die Kamera projiziert, und eine Inspektion auf optische Fehler der Glasscheibe (2) in einer Reflexionsoptik mit Rasterbeleuchtung, bei der ein auf die Glasscheibe projiziertes Raster in einer reflektierenden Anordnung gemessen wird, sind.

11. Verfahren nach Anspruch 10, **dadurch gekennzeichnet, dass** die Glasscheibe (2) an mindestes drei Inspektionsmodulen (5, 6, 7) vorbeigefahren wird und mindestens drei Auswerteverfahren angewendet werden.

12. Verfahren nach einem der Ansprüche 10 oder 11, **dadurch gekennzeichnet, dass** die Bilder einer Inspektionseinheit (7) mit mehreren Auswerteverfahren ausgewertet werden.

13. Verfahren nach einem der Ansprüche 10 bis 12, **dadurch gekennzeichnet, dass** nicht inspizierbare Bereiche der Glasscheibe (2) anhand vorgegebener Kriterien bei einem Auswerteverfahren von der Bilderverarbeitung erkannt werden.

14. Verfahren nach einem der Ansprüche 10 bis 13, **dadurch gekennzeichnet, dass** die Bilder der Glasscheibe (2) während des Vorbeifahrens der Glasscheibe (2) an dem Inspektionsmodul (5, 6, 7) erfolgt.

15. Verfahren nach einem der Ansprüche 10 bis 1714 **dadurch gekennzeichnet, dass** die Ergebnisse der verschiedenen Auswerteverfahren in einer zentralen Auswerteeinheit (12) zusammengefasst werden.

16. Verfahren nach Anspruch 15, **dadurch gekennzeichnet, dass** die Ergebnisse der verschiedenen Auswerteverfahren verknüpft werden und eine übergeordnete Auswertung unter Verwendung der Ergebnisse mehrerer Inspektionsmodule (5, 6, 7) erfolgt.

17. Verfahren nach Anspruch 15 oder 16, **dadurch gekennzeichnet, dass** aus den Ergebnissen aller Inspektionsmodule (5, 6, 7) eine vollständige Gesamtbeurteilung (13) der Glasscheibe (2) erstellt und angezeigt wird.

## Claims

1. A system for optically inspecting glass panes (2), comprising a conveyor (3) for moving the glass pane (2) and further comprising a first inspection module (5, 6, 7), which has an illumination device and a camera for illuminating and imaging the glass pane (2) and is connected to a first analysis module (8, 9, 10, 11) for analyzing the recorded images of the glass pane (2), wherein at least one second inspection module (5, 6, 7) having an illumination device and a camera for illuminating and imaging the glass pane (2) is connected to a second analysis module (8, 9, 10, 11) for analyzing the recorded images of the glass pane (2), wherein the illumination arrays and/or the cameras of the first inspection module (5, 6, 7) and of the second inspection module (5, 6, 7) are constructed differently and/or are arranged differently with respect to the glass pane (2) capable of being moved by means of the conveyor (3) past the inspection modules (5, 6, 7), wherein the inspection modules (5, 6, 7) of the system (1) are designed for measuring the glass pane (2) as it passes by and **characterized in that** the inspection modules of the system (1) are a module with raster illumination and a transmission array (5), in which a light source of the illumination device projects a defined pattern through the glass pane onto the camera, and a module with raster illumination and a reflection array, in which a raster projected onto the glass pane is measured in a reflective array.

2. The system according to Claim 1, **characterized by** a central analysis unit (12), which is connected downstream of the analysis modules (8, 9, 10, 11).

3. The system according to Claim 1 or 2, **characterized in that** provision is made of at least three inspection modules (5, 6, 7), each having an associated analysis module (8, 9, 10, 11).

4. The system according to any one of the preceding claims, **characterized in that** in an inspection module (5, 6, 7), provision is made of at least one camera in the dark field not captured by the illumination device of the inspection module.

5. The system according to any one of the preceding claims, **characterized in that** cameras are mounted in a stereo array in an inspection module (5, 6, 7).

6. The system according to any one of the preceding claims, **characterized in that** the glass pane is an automobile window pane (2).

7. The system according to any one of the preceding claims, **characterized in that** one inspection module (5) has an inclined positioning of the camera with respect to the glass pane (2) and one inspection module (6, 7) has a perpendicular positioning of the camera with respect to the glass pane (2).

8. The system according to any one of the preceding claims, **characterized in that** the inspection modules (5, 6, 7) are structured as separate units, which are arranged in succession along the conveyor (3).

9. The system according to any one of the preceding claims, **characterized in that** an inspection module (5, 6, 7) is screened off from incident light and/or from drafts of air.

10. A method for optically inspecting glass panes (2), in particular employing the system (1) according to any one of Claims 1 to 9, in which a glass pane (2) is moved past a first inspection module (5, 6, 7), wherein with the glass pane (2) illuminated, images are recorded with a camera and these images are analyzed in a first analysis module (8, 9, 10, 11) using a first analysis method, wherein the glass pane (2) is then moved past at least one second inspection module (5, 6, 7), wherein with the glass pane (2) illuminated, images are recorded with a camera and these images are analyzed in a second analysis module (8, 9, 10, 11) using a second analysis method different from the first analysis method, wherein the inspection modules (5, 6, 7) of the system (1) are designed for measuring the glass pane (2) as it passes by and **characterized in that** an inspection for optical defects in the transmission optics of the glass pane (2), in which a light source of the illumination device projects a defined pattern through the glass pane onto the camera, and an inspection for optical defects in the reflection optics of the glass pane (2) with raster illumination, in which a raster projected onto the glass pane is measured in a reflective array, are used as analysis methods.

11. The method according to Claim 10, **characterized in that** the glass pane (2) is moved past at least three inspection modules (5, 6, 7) and that at least three analysis methods are used.

12. The method according to either one of Claims 10 or 11, **characterized in that** the images of an inspection unit (7) are analyzed using a plurality of analysis methods.

13. The method according to any one of Claims 10 to 12, **characterized in that** on-inspectable areas of the glass pane (2) are detected by the image processing on the basis of default criteria during an analysis method.

14. The method according to any one of Claims 10 to 13, **characterized in that** the images of the glass pane (2) take place as the glass pane (2) moves past the inspection module (5, 6, 7).

15. The method according to any one of Claims 10 to 14, **characterized in that** the results of the different analysis methods are summarized in a central analysis unit (12).

16. The method according to Claim 15, **characterized in that** the results of the different analysis methods are combined and an overall analysis is performed using the results of a plurality of inspection modules (5, 6, 7).

17. The method according to Claim 15 or 16, **characterized in that** a full global assessment (13) of the glass pane (2) is compiled from the results of all inspection modules (5, 6, 7) and displayed.

## Revendications

1. Système d'inspection optique de vitres (2) avec un dispositif de transport (3) pour déplacer les vitres (2) et un premier module d'inspection (5, 6, 7), lequel comporte un dispositif d'éclairage et une caméra pour éclairer et filmer la vitre (2) et est relié avec un premier module d'évaluation (8, 9, 10, 11) pour évaluer les images reçues de la vitre (2), sachant qu'au moins un deuxième module d'inspection (5, 6, 7) avec un dispositif d'éclairage et une caméra pour éclairer et filmer la vitre (2), lequel est relié avec un deuxième module d'évaluation (8, 9, 10, 11) pour évaluer les images prises de la vitre (2), sachant que les systèmes d'éclairage et/ou les caméras du premier module d'inspection (5, 6, 7) et du deuxième module d'inspection (5, 6, 7) sont conçus différemment et/ou sont disposés de façon différente par rapport à la vitre (2) passant sur les modules d'inspection (5, 6, 7) au moyen du dispositif de transport (3), sachant que les modules d'inspection (5, 6, 7) du système (1) sont agencés pour la mesure de la vitre (2) au cours du passage et **caractérisé en ce que** les modules d'inspection du système (1) sont un module avec éclairage tramé et un système de transmission (5) pour lequel une source lumineuse du dispositif d'éclairage projette sur la caméra un motif défini à travers la vitre et un module avec éclairage tramé et système de réflexion pour lequel une trame projetée sur la vitre est mesurée dans un système réfléchissant.

2. Système selon la revendication 1, **caractérisé par** une unité d'évaluation (12), laquelle est montée en aval des modules d'évaluation (8, 9, 10, 11).

3. Système selon la revendication 1 ou 2, **caractérisé en ce qu'**au moins trois modules d'inspection (5, 6, 7) sont prévus avec respectivement un module d'évaluation (8, 9, 10, 11) attribué.

4. Système selon l'une quelconque des revendications précédentes, **caractérisé en ce que** dans un module d'inspection (5, 6, 7), au moins une caméra est prévue dans un fond noir non saisi par le dispositif d'éclairage du module d'inspection.

5. Système selon l'une quelconque des revendications précédentes, **caractérisé en ce que** des caméras sont montées dans un système stéréo dans un module d'inspection (5, 6, 7).

6. Système selon l'une quelconque des revendications précédentes, **caractérisé en ce que** la vitre est une vitre d'automobile (2).

7. Système selon l'une quelconque des revendications précédentes, **caractérisé en ce qu'**un module d'inspection (5) comporte un système incliné de la caméra par rapport à la vitre (2) et un module d'inspection (6, 7) comporte un système perpendiculaire de la caméra par rapport à la vitre (2).

8. Système selon l'une quelconque des revendications précédentes, **caractérisé en ce que** les modules d'inspection (5, 6, 7) sont conçus, comme des unités séparées, qui sont disposées l'une derrière l'autre le long du dispositif de transport (3).

9. Système selon l'une quelconque des revendications précédentes, **caractérisé en ce qu'**un module d'inspection (5, 6, 7) est protégé contre une incidence de lumière et/ou un afflux de courant d'air.

10. Procédé d'inspection optique de vitres (2), notamment en utilisant le système (1) selon l'une quelconque des revendications 1 à 9, pour lequel une vitre (2) est passé sur un premier module d'inspection (5, 6, 7), sachant qu'en éclairant la vitre (2) des images sont prises avec une caméra et ces images sont évaluées avec une première procédure d'évaluation dans un premier module d'évaluation (8, 9, 10, 11), sachant que la vitre (2) est ensuite passée sur au moins un deuxième module d'évaluation (5, 6, 7), sachant qu'en éclairant la vitre (2) des images sont prises avec une caméra et ces images sont évaluées avec une deuxième procédure d'évaluation différente de la première procédure d'évaluation dans un deuxième module d'évaluation (8, 9, 10, 11), sachant que les modules d'inspection (5, 6, 7) du système (1) sont agencés pour la mesure de la vitre (2) au cours du passage et **caractérisé en ce qu'**on utilise comme procédures d'évaluation, une inspection relative aux défauts optiques de la vitre (2) dans un système optique de transmission, pour lequel une source lumineuse du dispositif d'éclairage projette sur la caméra un motif défini à travers la vitre et une inspection relative aux défauts optiques de la vitre (2) est mesurée dans un système optique de réflexion avec un éclairage tramé, pour lequel une trame projetée sur la vitre est mesurée dans un système réfléchissant.

11. Procédé selon la revendication 10, **caractérisé en ce que** la vitre (2) est passée par au moins trois modules d'inspection (5, 6, 7) et **en ce qu'**au moins trois procédures d'évaluation sont utilisées.

12. Procédé selon l'une quelconque des revendications 10 ou 11, **caractérisé en ce que** les images d'une unité d'inspection (7) sont évaluées avec plusieurs procédures d'évaluation.

13. Procédé selon l'une quelconque des revendications 10 à 12, **caractérisé en ce que** des zones ne pouvant pas être inspectées de la vitre (2) sont identifiées à l'aide de critères prédéfinis à l'occasion d'une procédure d'évaluation du traitement des images.

14. Procédé selon l'une quelconque des revendications 10 à 13, **caractérisé en ce que** les images de la vitre (2) se produisent pendant le passage de la vitre (2) sur le module d'inspection (5, 6, 7).

15. Procédé selon l'une quelconque des revendications 10 à 14, **caractérisé en ce que** les résultats des différentes procédures d'évaluation sont résumés dans une unité centrale d'évaluation (12).

16. Procédé selon la revendication 15, **caractérisé en ce que** les résultats des différentes procédures d'évaluation sont associés et une évaluation supérieure a lieu en utilisant les résultats de plusieurs modules d'inspection (5, 6, 7).

17. Procédé selon la revendication 15 ou 16, **caractérisé en ce qu'**une appréciation globale complète (13) de la vitre (2) est établie et affichée à partir des résultats de tous les modules d'inspection (5, 6, 7).
